# FASCICULE DE BREVET EUROPEEN

(11) **EP 0 697 514 B1**
(45) Date de publication et mention de la délivrance du brevet: **14.04.1999**
(21) Numéro de dépôt: 95401861.0
(22) Date de dépôt: 09.08.1995
(51) Int. Cl.: F02K 1/80, F02K 1/12

(54) **Etanchéité entre volets suiveurs divergents et convergents d'une tuyère d'éjection de turboréacteur**
Dichtungselement für die ungesteuerten Klappen einer verstellbaren Convergent-Divergent-Schubdüse für ein Turbostrahltriebwerk
Sealing device for the slave flaps of a variable convergent-divergent nozzle for a jet engine

(30) Priorité: 18.08.1994 FR 9410103
(43) Date de publication de la demande: 21.02.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Lapergue, Guy, Jean-Louis, F-77950 Rubelles (FR); Lejars, Claude, F-91210 Draveil (FR)

(56) Documents cités:
- FR-A- 1 198 435
- FR-A- 1 227 966
- FR-A- 2 030 532
- FR-A- 2 397 534
- US-A- 4 196 856
- US-A- 4 878 618
- US-A- 5 269 467

## Description

La présente invention a pour objet une tuyère convergente-divergente réglable, apte à être parcourue par un fluide et destinée, notamment, à équiper un moteur à réaction, tel qu'un turboréacteur, utilisé pour la propulsion d'un engin volant, tel qu'un avion.

La tuyère visée par l'invention est du type général comprenant une pluralité de volets à inclinaison réglable dont chacun présente une face interne tournée vers l'axe de la tuyère et une face externe tournée vers l'extérieur de la tuyère, lesdits volets étant répartis en deux couronnes disposées à la suite l'une de l'autre dans le sens de l'écoulement du fluide, à savoir une couronne de volets amont et une couronne de volets aval, chaque couronne de volets comprenant elle-même un premier groupe de volets extérieurs, ou volets commandés, et un deuxième groupe de volets intérieurs, ou volets suiveurs, les volets commandés étant disposés en alternance avec les volets suiveurs suivant la direction circonférentielle de la tuyère, chaque volet commandé ou suiveur de la couronne amont étant articulé, à sa partie aval, à la partie amont d'un volet commandé ou suiveur de la couronne aval, et chaque volet suiveur prenant appui par sa surface externe, dans la zone de ses deux bords latéraux, sur la face interne des deux volets commandés adjacents.

Suivant une disposition fréquemment utilisée, les volets extérieurs sont commandés par exemple au moyen de vérins, tandis que les volets intérieurs dits suiveurs sont appliqués par le pression du jet gazeux contre les volets commandés.

Ce type de tuyère est monté notamment à l'arrière des turboréacteurs avec post-combustion qui équipent les avions militaires modernes.

Ces tuyères sont capables d'une cinématique convergente-convergente aux vitesses subsoniques et d'une cinématique convergente-divergente aux vitesses supersoniques. De plus le col de la tuyère, à l'articulation des volets de la couronne amont et des volets de la couronne aval, a une section réglable.

L'une des principales difficultés rencontrées dans la réalisation d'une tuyère convergente-divergente réglable, réside dans l'obtention d'une étanchéité satisfaisante aux joints des différents volets et notamment à l'articulation des volets des deux couronnes de volets au col de la tuyère.

Au niveau de l'articulation des volets commandés amont et aval, l'étanchéité est assurée par les volets eux-mêmes.

FR-A-2 227 433 décrit une tuyère telle que mentionnée ci-dessus, dans laquelle les volets suiveurs amont et aval sont articulés au moyen d'une charnière qui s'étend sur toute la largeur circonférentielle de ces volets, et dans laquelle les volets commandés de l'une des couronnes comportent au voisinage de leurs bords latéraux des logements pour recevoir de manière étanche et coulissante les extrémités des charnières des paires de volets suiveurs. Lors des variations d'inclinaison des volets, il se produit inévitablement des fuites entre les bords latéraux des volets de la couronne aval, du fait que les volets suiveurs aval ne peuvent se déplacer axialement par rapport aux volets suiveurs amont, de telle manière que leurs bords latéraux soient en appui étanche sur toute leur longueur sur la face interne des volets commandés aval.

Pour assurer l'étanchéité entre les volets suiveurs et les volets commandés d'une couronne, on prévoit un jeu axial à l'articulation des volets suiveurs amont et aval, ce qui entraîne des fuites à cette articulation, car le jeu est variable en fonction de la striction de la tuyère.

FR-A-2 366 454 montre une tuyère d'éjection des gaz à section variable dans laquelle il est prévu un joint d'étanchéité entre un volet amont et un volet aval susceptible de coulisser l'un par rapport à l'autre en fonction de leurs inclinaisons respectives. Mais il s'agit ici d'une tuyère de section globalement rectangulaire qui ne comporte pas de volets suiveurs.

Le but de la présente invention est de proposer une tuyère du type mentionné, dans laquelle l'étanchéité est assurée dans toutes les configurations de la tuyère.

Conformément à l'invention, dans une tuyère convergente-divergente réglable du type précité, il est prévu à l'articulation de deux volets suiveurs une plaque destinée à assurer l'étanchéité entre lesdits volets suiveurs dans toutes les configurations de la tuyère et qui s'étend au moins sur toute la largeur desdits volets suiveurs, ladite plaque étant articulée par son extrémité amont sur l'extrémité aval du volet suiveur amont et présentant sur la face externe de sa partie aval un premier bourrelet en appui sur la face interne du volet suiveur aval, ladite plaque étant pourvue sur sa face externe de moyens coopérant avec ledit bourrelet pour pincer la partie amont dudit volet suiveur aval tout en permettant son coulissement axial selon les configurations de la tuyère, la largeur de la plaque étant supérieure à la largeur des volets suiveurs et deux parois latérales adjacentes auxdits volets suiveurs étant prévues sur les bords latéraux de ladite plaque.

Cette disposition permet d'étancher les fuites entre le volet suiveur amont et le volet suiveur aval, au niveau du col de la tuyère.

D'autres caractéristiques et avantages de l'invention ressortiront à la lecture de la description suivante faite à titre d'exemple et en référence aux dessins annexés dans lesquels :
la figure 1 représente de façon schématique la position des volets dans deux configurations différentes de la tuyère ;
la figure 2 est une coupe du dispositif d'étanchéité prévu à l'articulation d'un volet suiveur amont et d'un volet suiveur aval, cette coupe étant prise dans un plan passant par l'axe de la tuyère ;
la figure 3 est une vue en perspective du dispositif d'étanchéité prévu à l'articulation d'un volet suiveur amont et d'un volet suiveur aval, les volets commandés étant enlevés par souci de clarté ;
la figure 4 montre schématiquement le dispositif d'étanchéité de l'invention dans une configuration fermée convergente-divergente de la tuyère;
la figure 5 montre le dispositif d'étanchéité dans une configuration fermée convergente-convergente de la tuyère.

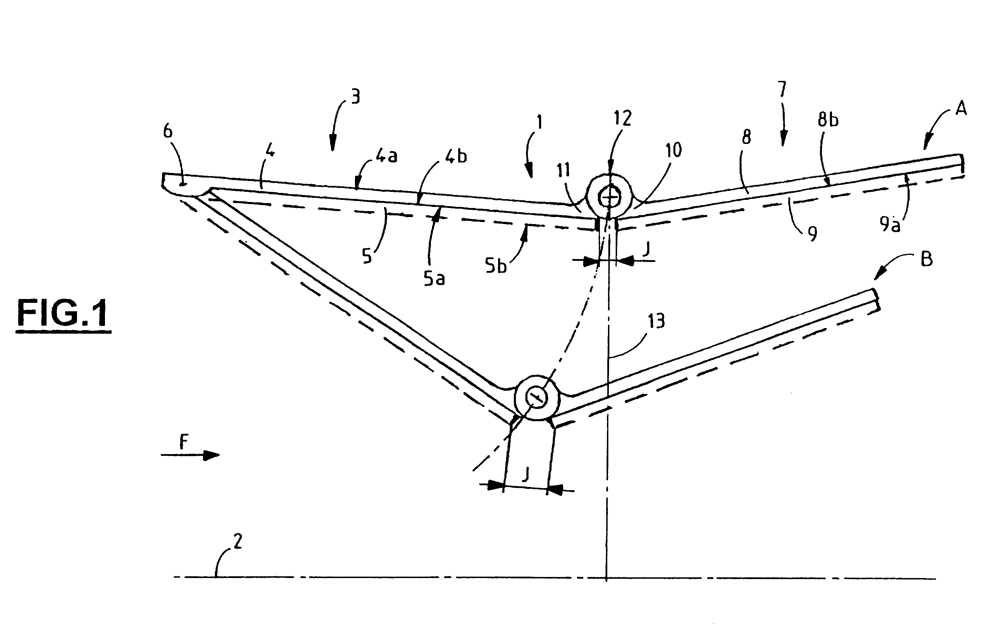

Sur la figure 1 on a représenté par la référence 1 une tuyère convergente-divergente réglable destinée à être montée à l'arrière d'un turboréacteur d'axe 2. Cette tuyère 1 comporte, en amont, dans le sens de l'écoulement du fluide F, une première couronne 3 de volets qui présente en alternance, dans le sens circonférentiel, des volets commandés amont 4 et des volets suiveurs amont 5. Les volets 4 et 5 sont articulés, à leur extrémité amont 6, sur la partie terminale du carter du turboréacteur. Ces volets 4 et 5 présentent respectivement des faces externes 4a, 5a tournées vers l'extérieur de la tuyère et des faces internes 4b, 5b tournées vers l'axe 2 du turboréacteur.

Les volets commandés 4 sont situés à l'extérieur de la couronne amont 3 et les volets suiveurs 5 sont situés à l'intérieur de la couronne amont 3, chaque volet suiveurs 5 prenant appui par sa surface externe 5a, dans la zone de ses deux bords latéraux, sur la face interne 4b des deux volets commandés 4 adjacents, de manière à assurer l'étanchéité entre les différents volets 4 et5 de la couronne amont 3.

La tuyère 1 comporte en outre en aval de la première couronne 3, une deuxième couronne 7 de volets, dite couronne aval. Cette couronne aval 7 comporte également en alternance, dans le sens circonférentiel de la tuyère 1, des volets commandés aval 8 et des volets suiveurs aval 9. Chaque volet commandé aval 8 est articulé à sa partie amont 10 sur la partie aval 11 d'un volet commandé amont 4, au moyen d'une articulation. étanche 12. Chaque volet suiveur aval 9 est également articulé à sa partie amont sur la partie aval d'un volet suiveur amont 5.

Les volets commandés aval 8 sont situés à l'extérieur de la couronne aval 7 et les volets suiveurs aval 9 sont situés à l'intérieur de la couronne aval 7. Les volets suiveurs aval 9 prennent appui par leur surface externe 9a, dans la zone de leurs bords latéraux. sur la face interne 8b des volets commandés aval 8, de manière à assurer l'étanchéité entre les différents volets 8 et 9 de la couronne aval 7.

L'étanchéité au col 13 de la tuyère 1, c'est-à-dire à l'articulation respective des volets commandés amont 4 et aval 7, et des volets suiveurs amont 5 et aval 8, est assurée, d'une part, par l'articulation 12 des volets commandés 4 et 8 et, d'autre part, par un dispositif d'étanchéité 14 prévu entre deux volets suiveurs successifs 5 et 9 et décrit plus loin dans le présent mémoire. En effet, par construction, il existe un jeu J entre un volet suiveur amont 5 et un volet suiveur aval 9, qui est fonction de la striction de la tuyère 1, et qui est nécessaire pour assurer l'étanchéité entre les bords latéraux des volets commandés et suiveurs de chacune des couronnes 3 et 7. Sur la figure 1 on a représenté deux configurations de la tuyère 1 : Une première configuration A dans laquelle la section du col 13 est grande et le jeu J relativement faible, et une deuxième configuration B dans laquelle la section du col 13 est faible et le jeu J relativement grand.

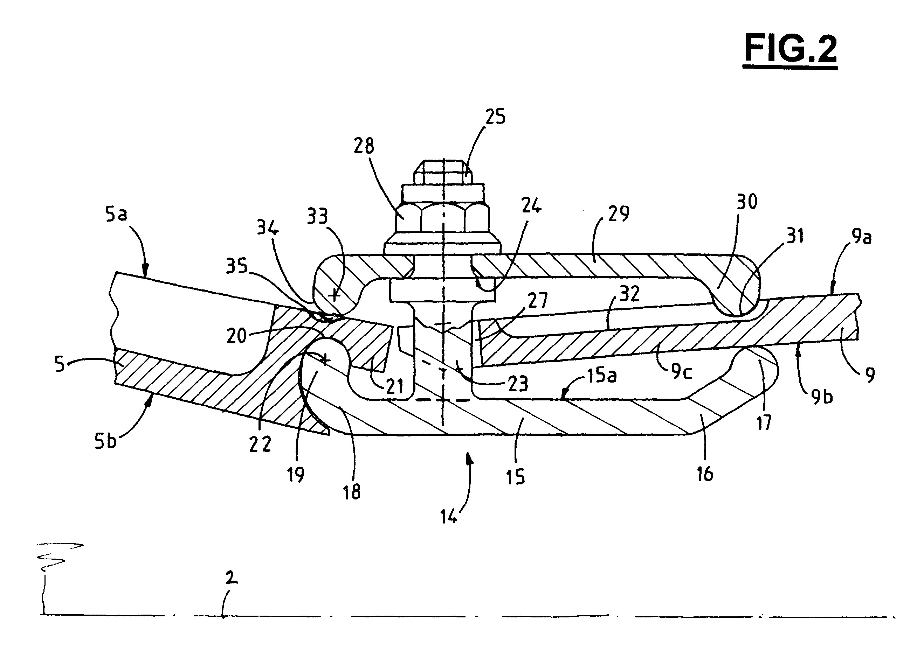

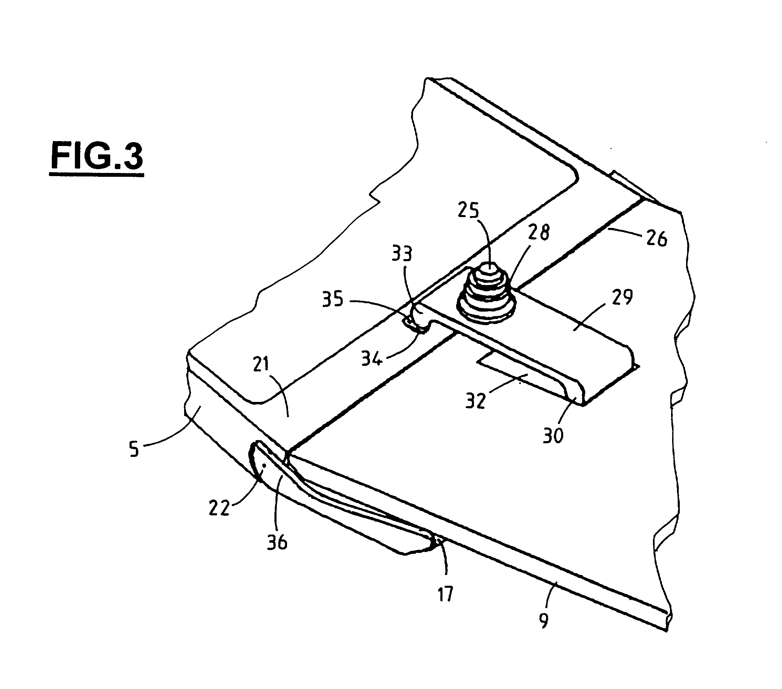

Le dispositif d'étanchéité 14, prévu à l'articulation entre deux volets suiveurs successifs, le volet suiveur amont 5 et le volet suiveur aval 9, et représenté sur les figures 2 à 4, comporte une plaque 15, qui s'étend au moins sur toute la largeur desdits volets 5 et 9.

La partie aval 16 de la plaque 15 est relevée vers l'extérieur par rapport à l'axe 2 de la tuyère 1 et présente sur son bord aval un premier bourrelet 17 de section semi-circulaire qui est en appui coulissant sur le face interne 9b du volet suiveur aval 9.

La partie amont 18 de la plaque 15 est courbe et dirigée vers l'extérieur, par rapport à l'axe de la tuyère 1 et elle se termine également par un deuxième bourrelet 19 de section semi-circulaire qui loge dans une gorge 20 semi-cylindrique, dirigée vers l'axe 2 de la tuyère 1 et aménagée dans le bord aval 21 du volet suiveur amont 5. Le deuxième bourrelet 19 et la gorge 20 sont profilés de telle manière que la plaque 15 puisse pivoter librement à l'extrémité amont du volet suiveur aval 5 autour d'un axe de pivotement 22, tout en assurant l'étanchéité à ce niveau.

La plaque 15 est pourvue sur sa face externe 15a d'une colonnette 23 disposée sensiblement au milieu de sa largeur. Cette colonnette 23 est située immédiatement en aval du volet suiveur amont 5 et elle comporte un épaulement 24 situé à l'extérieur des volets suiveurs 5 et 9 et une extrémité filetée 25. Le volet suiveur aval 9 présente à son extrémité amont 26 une encoche 27 pour le passage libre de la colonnette 23.

Sur l'épaulement 24 de la colonnette 23 est fixée au moyen d'un écrou, une barrette de verrouillage 29 qui comporte à son extrémité aval 30, en regard du premier bourrelet 17, une surface 31 de section semi-circulaire qui coopère avec le premier bourrelet 17 pour pincer la partie amont 9c du volet suiveur aval 9. Cette partie amont 9c comporte, de préférence, sur sa face externe 9a une gorge 32 dans laquelle coulisse l'extrémité aval 30 arrondie de la barrette de verrouillage 29.

L'extrémité amont 33 de la barrette de verrouillage 29 comporte également en regard du deuxième bourrelet 19, une surface 34 de section semi-circulaire qui est en appui sur une surface cylindrique 35 prévue sur la face externe 5a du volet suiveur amont 5 et centrée sur l'axe de pivotement 22.

Les bords latéraux de la plaque 15 comportent en outre des parois latérales 36 qui encadrent les deux volets 5 et 9 et qui assurent le positionnement transversal de la plaque 15. Ces parois latérales 36 obturent partiellement la fuite transversale entre les volets commandés 4, 8 et les volets suiveurs 5, 9 dans cette zone.

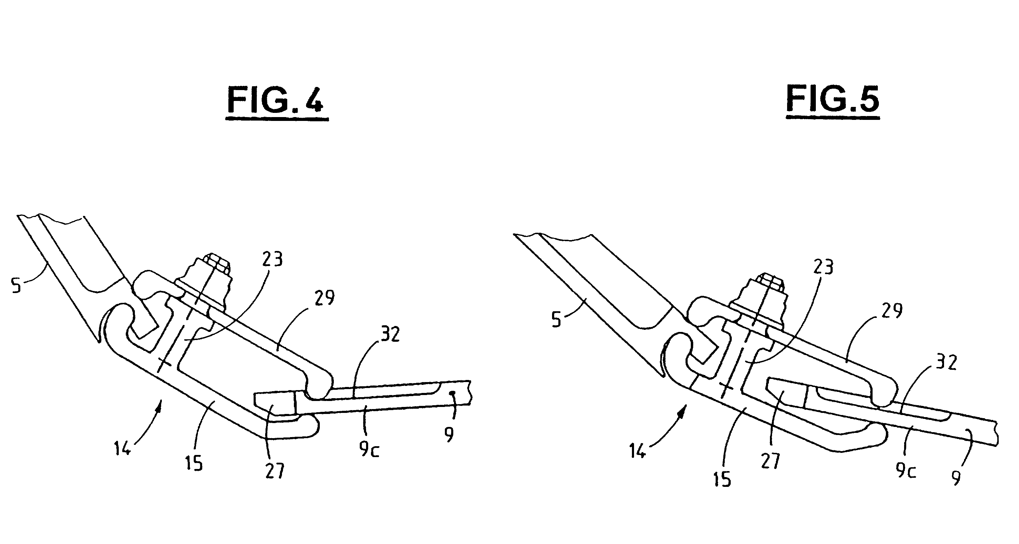

En fonctionnement, les volets commandés amont 4 et aval 8 sont commandés au moyen par exemple de vérins, afin que la tuyère 1 prenne des configurations adaptées aux conditions de vol. Les pressions du fluide F dans la tuyère 1 plaquent les volets suiveurs 5 et 9 sur les volets commandés adjacents 4 et 8, et les plaques 15 sur les volets suiveurs aval 9, ce qui assure l'étanchéité à l'articulation des volets suiveurs 5 et 9. La plaque 15 pivote, par rapport au volet suiveur amont 5, autour de l'axe de pivotement 22. La partie amont du volet suiveur aval 9 peut coulisser librement entre le premier bourrelet 17 de la plaque 15 et l'extrémité arrondie 30 aval de la barrette de verrouillage 29 dans toutes les configurations de la tuyère 1. La figure 1 montre la position respective des divers éléments, lorsque le jeu J entre les volets suiveurs 5 et 9 est minimum. La figure 4 montre le dispositif d'étanchéité 14 dans la configuration de la tuyère 1 en fermeture convergente-divergente, le jeu J étant maximum, et la figure 5 montre le dispositif d'étanchéité 14 dans la configuration de la tuyère en fermeture convergente-convergente, le jeu J ayant une valeur intermédiaire.

## Revendications

1. Tuyère convergente-divergente réglable, apte à être parcourue par un fluide (F), du type comportant une pluralité de volets à inclinaison réglable dont chacun présente une face interne tournée vers l'axe de la tuyère (1) et une face externe tournée vers l'extérieur de la tuyère (1), lesdits volets étant répartis en deux couronnes disposées à la suite l'une de l'autre dans le sens de l'écoulement du fluide, à savoir une couronne (3) de volets amont et une couronne (7) de volets aval, chaque couronne (3 ; 7) de volets comprenant elle-même un premier groupe de volets extérieurs, ou volets commandés (4 ; 8), et un deuxième groupe de volets intérieurs, ou volets suiveurs (5 ; 9), les volets commandés (4 ; 8) étant disposés en alternance avec les volets suiveurs (5 ; 9) suivant la direction circonférentielle de la tuyère, chaque volet commandé (4) ou suiveur (5) de la couronne amont (3) étant articulé, à sa partie aval (10), à la partie amont (11) d'un volet commandé (8) ou suiveur (9) de la couronne aval (7), et chaque volet suiveur (5 ; 9) prenant appui par sa surface externe (5a ; 9a), dans la zone de ses deux bords latéraux, sur la face interne (5b ; 8b) des deux volets commandés (4 ;8) adjacents,
ladite tuyère (1) étant caractérisée par le fait qu'il est prévu à l'articulation de deux volets suiveurs (5 ; 9) une plaque (15) destinée à assurer l'étanchéité entre lesdits volets suiveurs dans toutes les configurations de la tuyère et qui s'étend au moins sur toute la largeur desdits volets suiveurs, ladite plaque (15) étant articulée par son extrémité amont (18) sur l'extrémité aval (21) du volet suiveur amont (5) et présentant sur la face externe (15a) de sa partie aval un premier bourrelet (17) en appui sur la face interne (9b) du volet suiveur aval (9), ladite plaque (15) étant pourvue sur sa face externe (15a) de moyens coopérant avec ledit premier bourrelet (17) pour pincer la partie amont (9c) dudit volet suiveur aval (9), tout en permettant son coulissement axial en fonction des configurations de la tuyère et
par le fait que la largeur de la plaque (15) est supérieure à la largeur des volets suiveurs (5 ; 9), et par le fait qu'il est prévu sur les bords latéraux de ladite plaque (15) deux parois latérales (36) adjacentes auxdits volets suiveurs (5; 9).

2. Tuyère selon la revendication 1, caractérisée par le fait que le premier bourrelet (17) est prévu sur le bord aval de la plaque (15).

3. Tuyère selon l'une quelconque des revendications 1 et 2, caractérisée par le fait que les moyens coopèrent avec le premier bourrelet (17) pour pincer la partie amont (9c) du volet suiveur aval (9) comportant une colonnette (23) s'étendant sur la face externe (15a) de la plaque (15) et une barrette de verrouillage (29) fixée sur ladite colonnette (23), ladite barrette de verrouillage (29) présentant en regard dudit premier bourrelet (17) une première surface (31) convexe en appui sur la face externe (9a) du volet suiveur aval (9).

4. Tuyère selon la revendication 3, caractérisée par le fait que le volet suiveur aval (9) comporte sur la face externe (9a) de sa partie amont (9c) une gorge (32) longitudinale dans laquelle coulisse la première surface (31) de la barrette de verrouillage (29).

5. Tuyère selon l'une des revendications 3 ou 4, caractérisée par le fait que le volet suiveur aval (9) présente à son extrémité amont (26) une encoche (27) pour le passage de la colonnette (23).

6. Tuyère selon l'une des revendications 3 à 5, caractérisée par le fait que la barrette de verrouillage (29) présente à son extrémité amont (33) une deuxième surface convexe en appui sur la face externe (5a) de la partie aval du volet suiveur amont (5) et par le fait que l'articulation de la plaque (15) sur ledit volet suiveur amont (5) est réalisée par un deuxième bourrelet (19) prévu sur le bord amont de la plaque (15) et dirigé vers l'extérieur de la tuyère (1) et logeant dans une gorge (20) tournée vers l'axe de la tuyère et ménagée dans le bord aval (21) du volet suiveur amont (5).

7. Tuyère selon la revendication 6, caractérisée par le fait qu'il est prévu sur la face externe (5a) de la partie aval du volet suiveur amont (5) une surface cylindrique (35) centrée sur l'axe de pivotement (22) de la plaque (15) et du volet suiveur (5), sur laquelle la deuxième surface (34) convexe de la barrette de verrouillage (29) est en appui.

## Patentansprüche

1. Verstellbare konvergent-divergente Schubdüse, die von einem Fluid (F) durchströmt werden kann,
mit mehreren Klappen mit einstellbarer Neigung, die jeweils eine der Achse der Düse (1) zugewandte Innenseite und eine zum Außenraum der Düse (1) weisende Außenseite haben, wobei die Klappen auf zwei in Strömungsrichtung des Fluids aufeinanderfolgend angeordnete Kränze verteilt sind, nämlich einen Kranz (3) mit stromaufwärtigen Klappen und einen Kranz (7) mit stromabwärtigen Klappen, wobei jeder Kranz (3; 7) von Klappen seinerseits eine erste Gruppe von äußeren oder gesteuerten Klappen (4; 8) und zweite Gruppe von inneren oder ungesteuerten Klappen (Folgeklappen) (5; 9) aufweist und die gesteuerten Klappen (4; 8) in Umfangsrichtung der Düse mit den Folgeklappen (5; 9) abwechseln und wobei jede gesteuerte Klappe (4) oder Folgeklappe (5) des stromaufwärtigen Kranzes (3) mit ihrem stromabwärtigen Teil (10) mit dem stromaufwärtigen Teil (11) einer gesteuerten Klappe (8) oder einer Folgeklappe (9) des stromabwärtigen Kranzes (7) gelenkig verbunden ist und jede gesteuerte Klappe (5; 9) sich mit ihrer Außenseite (5a; 9a) im Bereich ihrer beiden seitlichen Ränder auf der Innenseite (5b; 8b) der beiden benachbarten gesteuerten Klappen (4; 8) abstützt,
wobei die Düse **dadurch gekennzeichnet** ist,
daß an der Gelenkverbindung zweier ungesteuerter Klappen (5; 9) eine Platte (15) vorgesehen ist, die in allen Konfigurationen der Düse die Abdichtung zwischen den Folgeklappen gewährleisten soll und die sich zumindest über die gesamte Breite der Folgeklappen erstreckt, wobei diese Platte (15) mit ihrem stromaufwärtigen Ende (18) an dem stromabwärtigen Ende (21) der stromaufwärtigen Folgeklappe (5) angelenkt ist und auf der Außenseite (15a) ihres stromabwärtigen Teils einen ersten Wulst (17) aufweist, der sich auf der Innenseite (9b) der stromabwärtigen Folgeklappe (9) abstützt, wobei die Platte (15) auf ihrer Außenseite (15a) Mittel aufweist, die mit dem ersten Wulst (17) zusammenwirken, um den stromaufwärtigen Teil (9c) der stromabwärtigen Folgeklappe (9) zu umklammern, dabei jedoch deren Gleiten in axialer Richtung in Abhängigkeit von den Konfigurationen der Düse zu erlauben,
daß die Breite der Platte (15) größer ist als die Breite der Folgeklappen (5; 9)
und daß an den seitlichen Rändern der Platte (15) zwei Seitenwände (36) vorgesehen sind, die an die Folgeklappen (5; 9) angrenzen.

2. Düse nach Anspruch 1, dadurch gekennzeichnet, daß der erste Wulst (17) an dem stromabwärtigen Rand der Platte (15) vorgesehen ist.

3. Düse nach einem der Ansprüche 1 und 2, dadurch gekennzeichnet, daß die Mittel, die mit dem ersten Wulst (17) zusammenwirken, um den stromaufwärtigen Teil (9c) der stromabwärtigen Folgeklappe (9) zu umklammern, eine auf der Außenseite (15a) der Platte (15) herausstehende Säule (23) und einen an dieser Säule (23) befestigten Verriegelungssteg (29) umfassen, wobei dieser Verriegelungssteg (29) eine dem ersten Wulst (17) zugewandte erste konvexe Fläche (31) aufweist, die sich auf der Außenseite (9a) der stromabwärtigen Folgeklappe (9) abstützt.

4. Düse nach Anspruch 3, dadurch gekennzeichnet, daß die stromabwärtige Folgeklappe (9) auf der Außenseite (9a) ihres stromaufwärtigen Teils (9c) eine longitudinale Kehle (32) aufweist, in der die erste Fläche (31) des Verriegelungsstegs (29) gleitet.

5. Düse nach einem der Ansprüche 3 oder 4, dadurch gekennzeichnet, daß die stromabwärtige Folgeklappe (9) an ihrem stromaufwärtigen Ende (26) eine Aussparung (27) für den Durchtritt der genannten Säule (23) aufweist.

6. Düse nach einem der Ansprüche 3 bis 5, dadurch gekennzeichnet,
daß der Verriegelungssteg (29) an seinem stromaufwärtigen Ende (33) eine zweite konvexe Fläche aufweist, die sich auf der Außenseite (5a) des stromabwärtigen Teils der stromaufwärtigen Folgeklappe (5) abstützt,
und daß die Gelenkverbindung der Platte (15) an der stromaufwärtigen Folgeklappe (5) von einem zweiten Wulst (19) gebildet wird, der an dem stromaufwärtigen Rand der Platte (15) vorgesehen und in einer Kehle (20) aufgenommen ist, die der Achse der Düse zugewandt und in dem stromabwärtigen Rand (21) der stromaufwärtigen Folgeklappe (5) ausgebildet ist.

7. Düse nach Anspruch 6, dadurch gekennzeichnet, daß auf der Außenseite (5a) des stromabwärtigen Teils der stromaufwärtigen Folgeklappe (5) eine zylindrische Fläche (35) vorgesehen ist, die auf der Schwenkachse (22) der Platte (15) und der Folgeklappe (5) zentriert ist, auf der sich die zweite konvexe Fläche (34) des Verriegelungsstegs (29) abstützt.

## Claims

1. Adjustable convergent-divergent nozzle, through which a fluid (F) can travel, of the type comprising a number of adjustable-inclination flaps each of which has an internal face facing towards the axis of the nozzle (1) and an external face facing towards the outside of the nozzle (1), the said flaps being distributed between two rings arranged one after the other in the direction in which the fluid flows, namely an upstream ring (3) of flaps and a downstream ring (7) of flaps, each ring (3; 7) of flaps itself comprising a first group of outer flaps, or controlled flaps (4; 8), and a second group of inner flaps or slave flaps (5; 9), the controlled flaps (4; 8) being alternated with the slave flaps (5; 9) in the circumferential direction of the nozzle, each controlled flap (4) or slave flap (5) of the upstream ring (3) being articulated, at its downstream part (10) to the upstream part (11) of a controlled flap (8) or slave flap (9) of the downstream ring (7), and each slave flap (5; 9) resting via its external surface (5a; 9a), in the region of its two lateral edges, on the internal face (5b; 8b) of the two adjacent controlled flaps (4; 8),
the said nozzle (1) being characterized in that, at the articulation between two slave flaps (5; 9), there is a plate (15) intended to provide a seal between the said slave flaps in all nozzle configurations and which extends at least over the entire width of the said slave flaps, the said plate (15) being articulated by its upstream end (18) to the downstream end (21) of the upstream slave flap (5) and on the external face (15a) of its downstream part having a first bulge (17) resting on the internal face (9b) of the downstream slave flap (9), the said plate (15) being equipped on its external face (15a) with means that cooperate with the said first bulge (17) to trap the upstream part (9c) of the said downstream slave flap (9), while at the same time allowing it to slide axially as a function of the nozzle configurations, and in the fact that the width of the plate (15) exceeds the width of the slave flaps (5; 9), and in that on the lateral edges of the said plate (15) there are two lateral walls (36) adjacent to the said slave flaps (5; 9).

2. Nozzle according to Claim 1, characterized in that the first bulge (17) is on the downstream edge of the plate (15).

3. Nozzle according to either one of Claims 1 and 2, characterized in that the means cooperating with the first bulge (17) to trap the upstream part (9c) of the downstream slave flap (9) comprise a short post (23) extending from the external face (15a) of the plate (15) and a locking bar (29) fixed to the said short post (23), the said locking bar (29) having, opposite the said first bulge (17), a first convex surface (31) resting on the external face (9a) of the downstream slave flap (9).

4. Nozzle according to Claim 5, characterized in that the downstream slave flap (9) has, on the external face (9a) of its upstream part (9c), a longitudinal groove (32) in which the first surface (31) of the locking bar (29) slides.

5. Nozzle according to either one of Claims 3 and 4, characterized in that the downstream slave flap (9) at its upstream end (26) has a cut-out (27) through which the short post (23) can pass.

6. Nozzle according to one of Claims 3 to 5, characterized in that the locking bar (29) at its upstream end (33) has a second convexe surface resting on the external face (5a) of the downstream part of the upstream slave flap (5), and in that the plate (15) is articulated to the said upstream slave flap (5) via a second bulge (19) at the upstream edge of the plate (15) and facing towards the outside of the nozzle (1) and housed in a groove (20) facing towards the axis of the nozzle and formed in the downstream edge (21) of the upstream slave flap (5).

7. Nozzle according to Claim 6, characterized in that on the external face (5a) of the downstream part of the upstream slave flap (5) there is a cylindrical surface (35) centred on the axis of pivoting (22) of the plate (15) and of the slave flap (5), against which surface the second convex surface (34) of the locking bar (29) rests.
